# EUROPEAN PATENT APPLICATION

(11) **EP 2 194 106 A1**
(43) Date of publication of application: **09.06.2010**
(21) Application number: 09177560.1
(22) Date of filing: 01.12.2009
(51) Int. Cl.: C09J 7/02, C08K 7/22

(54) **Double-sided pressure-sensitive adhesive tape**

(30) Priority: 04.12.2008 JP 2008310158; 04.12.2008 JP 2008310162
(71) Applicant: Nitto Denko Corporation, Ibaraki-shi, Osaka 567-8680 (JP)
(72) Inventor: Daigaku, Noritsugu, Ibaraki-shi Osaka 567-8680 (JP); Tamai, Hironori, Ibaraki-shi Osaka 567-8680 (JP); Takahashi, Makoto, Ibaraki-shi Osaka 567-8680 (JP)
(74) Representative: Grünecker, Kinkeldey, Stockmair & Schwanhäusser Anwaltssozietät

(57) **Abstract**

Provided is a double-faced pressure-sensitive adhesive tape superior in processability and workability during operation in solar cell modules.

The double-faced pressure-sensitive adhesive tape according to the present invention is a double-faced pressure-sensitive adhesive tape having an acrylic pressure-sensitive adhesive layer containing bubbles and/or hollow microspheres, **characterized in that** the frictional force, which is defined as the stress applied when a sample of 2 cmx2 cm in size having a 30 g load fixed on at least one side of the acrylic pressure-sensitive adhesive layer containing bubbles and/or hollow microspheres, is pulled on an aluminum plate in the horizontal direction at a speed of 300 mm/min, is 0.01 to 1.0 N/cm².

## Description

### BACKGROUND OF THE INVENTION

### Field of the Invention

The present invention relates to a double-faced pressure-sensitive adhesive tape, more specifically to a double-faced pressure-sensitive adhesive tape superior in processability and workability during operations.

### Description of the Background Art

Solar cell modules are produced by incorporating a solar panel (crystalline-silicon solar panel), which is prepared by sealing silicon cells formed on a glass plate for example with an ethylene-vinyl acetate (EVA) resin and installing a back sheet, into a frame (see Patent Document 1). Since solar cell modules are used outdoor, penetration of water into the panels should be avoided.

For example for prevention of penetration of water into panel, an expanded sealing material is placed as it is compressed between the panel and the frame. In particular, a method of bonding an expanded sealing material to the panel end and coating the top, bottom, and end faces of the region close to the panel end before installing the panel in frame (insertion into frame) is known as a method advantageous for automated bonding without protrusion of the sealing material (see Patent Document 2). However, such a method causes problems in processability because the expanded sealing material is tacky.

Patent Document 1: Japanese Unexamined Patent Publication Application No. 2003-110128
Patent Document 2: Japanese Unexamined Patent Publication Application No. 2003-137611

### SUMMARY OF THE INVENTION

Accordingly, an object of the present invention is to provide a double-faced pressure-sensitive adhesive tape superior in processability and workability during operations such as coating of the top, bottom and end faces of the region close to the end of the panel for solar cell module and installation of the panel into a frame.

After intensive studies to solve the problems above, the inventors have found that it is possible to improve the lubricity in the horizontal direction of a double-faced pressure-sensitive adhesive tape having an acrylic pressure-sensitive adhesive layer containing bubbles and/or hollow microspheres as the pressure-sensitive adhesive layer, and improve the tackiness in the thickness direction, by adjusting the frictional force on the pressure-sensitive adhesive face in the horizontal direction in a particular range, and made the present invention.

Thus, the present invention provides a double-faced pressure-sensitive adhesive tape having an acrylic pressure-sensitive adhesive layer containing bubbles and/or hollow microspheres, **characterized in that** the frictional force, which is defined as the stress applied when a sample of 2 cm×2 cm in size having a 30 g load fixed at least on one side of the acrylic pxessure-sensitive adhesive layer containing bubbles and/or hollow microspheres is pulled on an aluminum plate in the horizontal direction at a speed of 300 mm/min, is 0.01 to 1.0 N/cm².

The present invention also provides the double-faced pressure-sensitive adhesive tape described above, wherein the acrylic pressure-sensitive adhesive layer containing bubbles and/or hollow microspheres has a porous screen at least on one side, and the frictional force, which is defined as the stress applied when a sample of 2 cm×2 cm having a 30 g load fixed is pulled with its porous screen-side face placed on an aluminum plate in the horizontal direction at a speed of 300 mm/min, is 0.01 to 1.0 N/cm².

The present invention further provides the double-faced pressure-sensitive adhesive tape described above, wherein the area ratio of the pressure-sensitive adhesive region to the porous screen region (region other than the pressure-sensitive adhesive region), i.e., pressure-sensitive adhesive region /porous screen region (region other than the pressure-sensitive adhesive region), on the side of the acrylic pressure-sensitive adhesive layer containing bubbles and/or hollow microspheres having a porous screen is 5/95 to 95/5.

The double-faced pressure-sensitive adhesive tape according to the present invention, which has the above-mentioned configuration, is superior in processability and workability during operations such as coating of the top, bottom and end faces of the panel close to the end and installation of the panel into the solar cell module.

### BREIF DESCRIPTION OF THE DRAWINGS

Figure 1 is a schematic top view illustrating a bubble-containing acrylic pressure-sensitive adhesive layer having a porous screen formed on one pressure-sensitive adhesive face.

Figure 2 is a schematic cross-sectional view taken along a line A-A, illustrating the bubble-containing acrylic pressure-sensitive adhesive layer having a porous screen formed on one pressure-sensitive adhesive face shown in Figure 1.

Figure 3 includes a schematic sectional view illustrating a state of a bubble-containing acrylic pressure-sensitive adhesive layer having a porous screen on one pressure-sensitive adhesive face in contact with a contactant in a non-pressurized state on the face where the porous screen is formed (3-1) and a schematic sectional view illustrating a state of a bubble-containing acrylic pressure-sensitive adhesive layer having a porous screen on one pressure-sensitive adhesive face in contact with a contactant in a pressurized state on the face where the porous screen is formed (3-2).

Figure 4 is a schematic sectional view showing the method of evaluating processability.

### EXPALATION OF REFERENCES

- 1:: Bubble-containing acrylic pressure-sensitive adhesive layer
- 2:: Porous screen
- 3:: Contactant
- 41:: Double-faced pressure-sensitive adhesive tape
- 42:: Acrylic plate
- 43:: Aluminum frame
- a:: Insertion direction

### DESCRIPTION OF THE PREFERRED EMBODIMENTS

The double-faced pressure-sensitive adhesive tape (double-faced adhesive tape) according to the present invention is a double-faced pressure-sensitive adhesive tape having an acrylic pressure-sensitive adhesive layer containing bubbles and/or hollow microspheres, wherein the frictional force, which is defined as the stress applied when a sample of 2 cmx2 cm in size having a 30-g load fixed at least on one side of the acrylic pressure-sensitive adhesive layer containing bubbles and/or hollow microspheres is pulled on an aluminum plate at a speed of 300 mm/min in the horizontal direction, is 0.01 to 1.0 N/cm². A pressure-sensitive adhesive face having such a frictional force shows both lubricity and tackiness. Hereinafter, the "acrylic pressure-sensitive adhesive layer (adhesive) containing bubbles and/or hollow microspheres" may be referred to as a "bubble-containing acrylic pressure-sensitive adhesive layer (adhesive)".

In the present invention, a porous screen is normally laminated to a surface of the bubble-containing acrylic pressure-sensitive adhesive layer to make the bubble-containing acrylic pressure-sensitive adhesive layer have the frictional force and the properties described above. Thus in the present invention, the porous screen is formed at least on one side of the bubble-containing acrylic pressure-sensitive adhesive layer, and the frictional force, which is defined as the stress applied when a sample of 2 cm×2 cm in size having a 30-g load fixed is pulled with its porous screen-side face placed on an aluminum plate in the horizontal direction at a speed of 300 mm/min, is preferably 0.01 to 1.0 N/cm².

The double-faced pressure-sensitive adhesive tape according to the present invention may be a base-less type having no base (base layer) or a base-containing type having a base (base layer). The pressure-sensitive adhesive face (pressure-sensitive adhesive layer face) may be provided by other pressure-sonsitive adhesive layer (pressure-sensitive adhesive layer other than the bubble-containing acrylic pressure-sensitive adhesive layer). In the present invention, the "double-faced pressure-sensitive adhesive tapes", when used, include sheet-shaped products, i.e., "dauble-faced adhesive sheets".

Examples of the double-faced pressure-sensitive adhesive tape according to the present invention, when it is a base-less type, include a base-less double-faced pressure-sensitive adhesive tape having a bubble-containing acrylic pressure-sensitive adhesive layer having a frictional force in the horizontal direction in a particular range at least on one side, and a base-less double-faced pressure-sensitive adhesive tape having at least a bubble-containing acrylic pressure-sensitive adhesive layer having a frictional force in the horizontal direction in a particular range and another pressure-sensitive adhesive layer wherein a face of the bubble-containing acrylic pressure-sensitive adhesive layer having the frictional force in the horizontal direction in a particular range and the face provided by the another pressure-sensitive adhesive layer are configured to provide the pressure-sensitive adhesive faces, and the like.

Any known adhesive may be used for the other pressure-sensitive adhesive layer, and examples thereof include acrylic adhesives, rubber-based adhesives, vinyl alkylother-based adhesives, silicone-based adhesives, polyester-based adhesives, polyamide-based adhesives, urethane-based adhesives, fluorine-based adhesives, epoxy-based adhesives, and the like.

Example of the double-faced pressure-sensitive adhesive tape according to the present invention, when it is a base-containing type, is a base-containing double-faced prossure-sensitive adhesive tape at least having a base and a bubble-containing acrylic pressure-sensitive adhesive layer having a frictional force in the horizontal direction in a particular range, wherein the face having a frictional force in the horizontal direction in a particular range of the bubble-containing acrylic pressure-sensitive adhesive layer having a frictional force in the horizontal direction in a particular range is configured to provide at least one pressure-sensitive adhesive face, and the like.

### (Bubble-containing acrylic pressure-sensitive adhesive layer)

The bubble-containing acrylic pressure-sensitive adhesive layer contains an acrylic polymer [in particular, an acrylic polymer employing a (meth)acrylic ester as the monomer component] as the base polymer (principal component). A (meth)acrylic alkyl ester (straight- or branched-chain alkyl group-containing (meth)acrylic alkyl ester) may be used preferably as the monomer component mainly constituting the acrylic polymer. Examples of the (meth)acrylic alkyl esters include (meth)acrylic C₁₋₂₀ alkyl esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Preferable among them are (meth)acrylic acid C₂₋₁₄ alkyl esters, and more preferable are (meth)acrylic C₂₋₁₀ alkyl esters. The "(meth)acrylic esters" means "acrylic esters" and/or "methacrylic esters", and relative terms also have similar meanings.

Examples of the (meth)acrylic esters other than the (meth)acrylic alkyl esters above include alicyclic hydrocarbon group-containing (meth)acrylic esters such as cyclopentyl (meth)acrylate, cyclohexyl (meth)acrylate and isobornyl (meth)acrylate; aromatic hydrocarbon group-containing (meth)acrylic esters such as phenyl (meth)acrylate; and the like.

These (meth)acrylic esters may be used alone or in combination of two or more. The ratio of the (meth)acrylic ester [in particular, a (meth)acrylic alkyl ester], which is used as the principal monomer component for the acrylic polymer, is preferably, for example 60 wt % or more, more preferably 80 wt % or more, with respect to the total amount of the monomer components for preparation of the acrylic polymer.

In preparation of the acrylic polymer, various copolymerizable monomers such as polar group-containing monomers and polyfunctional monomers may also be used as the monomer components. Use of copolymerizable monomers as the monomer components enables, for example, improvement in adhesive strength to the adherend and cohesive force of the adhesive. The copolymerizable monomers may be used alone or in combination of two or more.

Examples of the polar group-containing monomers include carboxyl group-containing monomers such as (meth)acrylic acid, itaconic acid, maleic acid, fumaric acid, crotonic acid, and isocrotonic acid or the anhydrides thereof (such as maleic anhydride); hydroxyl group-containing monomers such as hydroxyalkyl (meth)acrylate (in particular, hydroxyethyl (meth)acrylate, hydroxypropyl (meth)acrylate, and hydroxybutyl (meth)acrylate) amide group-cantaining monomers such as acrylamide, methacrylamide, N,N-dimethyl(meth)acrylamzde, N-methylol(meth)acrylamide, N-methoxymethyl(meth)acrylamide, and N-butoxymethyl(meth)acrylamide; amino-group-cantaining monomers such as aminoethyl (meth)acrylate, dimethylaminoethyl (meth)acrylate, and t-butylaminoethyl (meth)acrylate; glycidyl group-containing monomers such as glycidyl (meth)acrylate, and methyl glycidyl (meth)acrylate; cyano group-containing monomers such as acrylonitrile, and methacrylonitrile; heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate-based monomers such as methoxyethyl (meth)acrylate, and ethoxyethyl (meth)acrylate; sulfonic acid group-containing monomers such as sodium vinylsulfonate; phosphoric acid group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate, and the like. Carboxyl group-containing monomers such as acrylic acid or the anhydrides thereof are preferable as the polar group-containing monomers.

The amount of the polar group-containing monomer used is 30 wt % or less (e.g., 1 to 30 wt %), and preferably 3 to 20 wt %, with respect to the total amount of the monomer components for the acrylic polymer. A polar group-containing monomer content of more than 30 wt % may lead, for example, to excessively high cohesive force of the acrylic adhesive and deterioration in tackiness of the pressure-sensitive adhesive layer. Alternatively, an excessively low polar group-containing monomer content (e.g., less than 1 wt %) may prohibit the advantageous effects obtained by copolymerization of these monomers.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxyacrylate, polyester acrylate, urethane acrylate, and the like.

The amount of the polyfunctional monomer used is 2 wt % or less (for example, 0.01 to 2 wt %), and preferably 0.02 to 1 wt %, with respect to the total amount of the monomer components for the acrylic polymer. A polyfunctional monomer content of more than 2 wt % with respect to the total amount of the monomer components for the acrylic polymer may lead, for example, to excessively high cohesive force of the adhesive and deterioration in tackiness. Alternatively, excessively low polyfunctional monomer content (e.g., less than 0.01 wt %) may prohibit the advantageous effects obtained by copolymerization of these monomers.

Examples of the copolymerizable monomers other than the polar group-containing monomers and the polyfunctional monomers include vinyl esters such as vinyl acetate, and vinyl propionate; aromatic vinyl compounds such as styrene, and vinyltoluene; olefins or dienes such as ethylene, butadiene, isoprene, and isobutylene; vinylethers such as vinyl alkylether; vinyl chloride, and the like.

The adhesive may contain suitable additives as needed. For example, it may contain according to the kind of the base polymer, suitable additives such as crosslinking agents (such as polyisocyanate-based crosslinking agents, silicone-based crosslinking agents, epoxy-based crosslinking agents and alkyl-etherified melamine-based crosslinking agents), tackifiers (resins solid, semi-solid or liquid at room temperature such as rosin-derived resins, polyterpene resins, petroleum resins, and oil-soluble phenol resins), polymerization modifiers (such as lauryl mercaptan and thioglycol acids), plasticizers, fillers, aging inhibitors, and colorants (such as pigments and dyes). When the adhesive is an adhesive containing bubbles and/or hollow microspheres described below, fluorochemical surfactants are preferably added as additives. The amount of these additives added is not particularly limited, but preferably, for example 50 wt parts or less, and more preferably 10 wt parts or less, with respect to 100 wt parts of the total monomer components for the acrylic polymer.

In preparation of the acrylic polymer as base polymer in the adhesive, a curing reaction by heat or active-energy ray by using a polymerization initiator such as thermal polymerization initiator or photopolymerization initiator (photoinitiator) may be used. In particular for acceleration of polymerization and improvement in stability of the bubbles if contained, a active-energy ray curing reaction (photopolymerization) by using a photopolymerization initiator can be used preferably. The polymerization initiators may be used alone or in combination of two or more.

Examples of the thermal polymerization initiators include azo-based polymerization initiators [such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) bisulfate salt, and 2,2'-azobis(N,N'-dimethyleneisobutylamidine) dihydrochloride], peroxide-based polymerization initiators (such as dibenzoyl peroxide and tert-butyl permaleate), redox-based polymerization initiators, and the like. The amount of the thermal polymerization initiators used is not particularly limited, and may be in a range traditionally used for such thermal polymerization initiators.

Examples of the photopolymerization initiators for use include, but are not limited to, benzoin ether-based photopolymerization initiators, acetophenone-based photopolymerization initiators, α-ketol-based photopolymerization initiators, aromatic sulfonylchlaride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators, and the like.

Specific examples of the benzoin ether-based photopolymerization initiators include benzoin methylether, benzoin ethylether, benzoin propylether, benzoin isopropylether, benzoin isobutylether, 2,2-dimethoxy-1,2-diphenylethan-1-one, anisole methylether, and the like. Examples of the acetophenone-based photopolymerization initiators include 2,2-diethoxyacetophenone, 2,2-dimethoxy-2-phenylacetophonone, 1-hydroxycyclohexylphenylketone, 4-phenoxydichloroacetophonone, 4-(t-butyl)dichloroacetophonone, and the like. Examples of the α-ketol-based photopolymerization initiators include 2-methyl-2-hydroxypropiophenone, 1-[4-(2-hydroxyethyl)phenyl]-2-methylpropan-1-one, and the like. Examples of the aromatic sulfonylchloride-based photopolymerization initiators include 2-naphthalenesulfonylchloride, and the like. Examples of the photoactive oxime-based photopolymerization initiators include 1-phenyl-1,1-propandione-2-(o-ethoxycarbonyl)-oxime, and the like.

The benzoin-based photopolymerization initiators include, for example, benzoin and the like. Examples of the benzyl-based photopolymerization initiators include benzyl and the like. Examples of the benzophenone-based photopolymerization initiators include benzophenone, benzoylbenzoic acid, 3,3'-dimethyl-4-methoxybenzophenone, polyvinylbenzophenone, a-hydroxycyclohexylphenylketone, and the like, Examples of the ketal-based photopolymerization initiators include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-diisopropylthioxanthone, dodecylthioxanthone, and the like.

The amount of the photopolymerization initiators used is not particularly limited, but may preferably be selected, for example, in the range of 0.01 to 5 wt parts (preferably 0.05 to 3 wt parts) with respect to 100 wt parts of the total monomer components for the acrylic polymer.

An active-energy ray is irradiated for activation of the photopolymerization initiator. Examples of the active-energy rays include ionizing radiation rays such as α ray, β ray, γ ray, neutron beam, and electron beam, ultraviolet ray and the like, and ultraviolet ray is particularly preferable. The irradiation energy and the exposure period of the active -energy ray for example are not particularly limited, if the photopolymerization initiator can be activated for reaction of the monomer components.

The bubble-containing acrylic pressure-sensitive adhesive layer contains at least bubbles or hollow microspheres. For that reason, the pressure-sensitive adhesive tape according to the present invention shows sealing property and water-blocking property by repulsion stress when it is fixed as compressed.

The amount of the bubbles possibly contained in the bubble-containing acrylic pressure-sensitive adhesive layer may be selected properly in the range that does not damage adhesiveness, lubricity and others, but normally is 5 to 50 vol % (preferably 10 to 40 vol %, more preferably 12 to 30 vol %) with respect to the total volume of the bubble-containing acrylic pressure-sensitive adhesive layer. Abubble content of less than 5 vol % may lead to unfavorable stress relaxation efficiency, making it difficult to show the sealing and water-blocking properties by repulsion stress when it is fixed as compressed. Alternatively, a content of more than 50 vol % may lead to generation of bubbles penetrating the pressure-sensitive adhesive layer, which in turn leads to deterioration in adhesiveness and excessive softening of the bubble-containing acrylic pressure-sensitive adhesive layer.

The bubbles mixed in the bubble-containing acrylic pressure-sensitive adhesive layer are desirably, fundamentally independent bubbles, but may be a mixture of independent bubbles and semi-independent bubbles.

Such a bubble usually has a spherical shape, but may have an irregular spherical shape. The average air bubble diameter of the bubbles is not particularly limited, and can be selected properly, for example, in the range of 1 to 1000 µm (preferably 10 to 500 µm, more preferably 30 to 300 µm).

The gas component contained in the bubbles (gas component forming the bubbles, which will be referred to as "bubble-forming gas") is not particularly limited, and various gas components including inert gases (such as nitrogen, carbon dioxide, and argon) and air can be used. If a reaction, such as polymerization reaction, is carried out after mixing with the bubble-forming gas, it is important to use a bubble-forming gas that is inert to the reaction. The bubble-forming gas is preferably nitrogen, from the viewpoints of reaction inhibition and production cost.

It is possible, for example, to improve tensile strength, bending strength and impact strength, and also processability, by using hollow microspheres as a component for the bubble-containing acrylic pressure-sensitive adhesive layer. The hollow microspheres may be used alone or in combination of two or more.

The hollow microsphere may be a hollow inorganic microsphere or a hollow organic microsphere. Specific examples of the hollow inorganic microspheres among the hollow microspheres include hollow balloons of glass such as hollow glass balloons; hollow balloons of metallic compound such as hollow alumina balloons; hollow balloons of ceramic such as hollow ceramic balloons; and the like. Alternatively, examples of the hollow organic microspheres include hollow balloons of a resin such as hollow acrylic balloons, hollow vinylidene chloride balloons, and the like.

The particle diameter of the hollow microspheres (average particle diameter) is not particularly limited, but can be selected, for example, in the range of 1 to 500 µm (preferably 5 to 200 µm, more preferably 10 to 100 µm).

The specific density of the hollow microspheres is not particularly limited, but can be selected, for example, in the range of 0.1 to 0.8 g/cm³ (preferably 0.12 to 0.5 g/cm³). Hollow-microspheres having a specific density of less than 0.1 g/cm³ make it difficult to mix and disperse the hollow microspheres uniformly, because of increased floating, while those having a density larger than 0.8 g/cm³ are more expensive and raise the production cost.

The amount of the hollow microspheres used is not particularly limited, but can be selected for example, in the range of 5 to 50 capacity % (vol %), preferably 10 to 50 capacity %, and more preferably 15 to 40 capacity %, with respect to the total volume of the bubble-containing acrylic pressure-sensitive adhesive layer. When the hollow microspheres are used in an amount of less than 5 capacity %, the advantageous effects obtained by adding the hollow microspheres may become decreased, while when the microspheres are used in an amount of more than 50 capacity %, the adhesive strength may be deteriorated.

The pressure-sensitive adhesive composition for preparation of the bubble-containing acrylic pressure-sensitive adhesive layer for use in the present invention can be prepared by mixing monomer components for the acrylic polymer (such as (meth)acrylic esters), polymerization initiators, various additives and others by a known method. Alternatively, the monomer components may be partially polymerized, for example, for viscosity adjustment, as needed. The bubble-containing pressure-sensitive adhesive composition is prepared, for example, according to the following procedure of: (i) preparing a monomer mixture by mixing the monomer components for forming the base polymer (such as (meth)acrylic esters and other copolymerizable monomers) with photopolymerization initiators, (ii) preparing a composition (sirup or sirup-like composition) wherein only part of the monomer components are polymerized by photopolymerization (for example, ultraviolet polymerization) of the monomer mixture, and then, (iii) blending the obtained sirup with hollow microspheres, fluorochemical surfactants, and other additives, as needed, and further, if the adhesive contains bubbles, (iv) supplying and mixing bubbles with the blend obtained in (iii). The method of producing the bubble-containing pressure-sensitive adhesive composition is not limited thereto, and, for example, a method of blending the monomer mixture with fluorochemical surfactants and hollow microspheres during preparation of the sirup may be used.

If bubbles are to be contained, it is preferable for stabilized dispersion of bubbles in the pressure-sensitive adhesive layer during mixing, for example, to add bubbles to and mix them in the pressure-sensitive adhesive composition as the final component, as in the production method described above. It is also preferable for stabilized mixing of bubbles to raise the viscosity of the blend (for example, the blend obtained in (iii)) before bubble mixing. The viscosity of the blend before bubble mixing is not particularly limited, but preferably, for example, 5 to 50 Pa·s, and more preferably 10 to 40 Pa·s (as determined by using a BH viscometer, rotor: No.5 rotor, rotational frequency: 10 rpm, measurement temperature: 30°C). A viscosity of less than 5 Pa·s may result in coalescence and disappearance of the mixed bubbles in the system because of excessively low viscosity, while a viscosity of more than 50 Pa· s may result in difficulty in forming the pressure-sensitive adhesive layer by coating because of excessively high viscosity. The viscosity can be adjusted, for example, by a method of blending various polymer components such as acrylic rubbers and thickeners or by a method of polymerizing part of the monomer components for the base polymer.

The method of mixing bubbles in preparation of the bubble-containing pressure-sensitive adhesive composition is not particularly limited, and any known bubble mixing method may be used. An example of the apparatus is an apparatus including a stator having many fine gears on a circular plate having a through hole in the center, and a rotor facing the gears-equipped stator and having small gears on a circular plate similarly to the stator. The blend for bubble mixing is fed into the space between the gears of stator and those of the rotor in the apparatus; and a bubble-forming gas component (bubble-forming gas) is supplied through the through-hole, while the rotor is rotated at high speed, to give a bubble-containing pressure-sensitive adhesive composition in which the bubble-forming gas is finely dispersed and mixed.

For reduction or prevention of coalescence of bubbles, the operations from bubble mixing to formation of the pressure-sensitive adhesive layer are preferably carried out continuously in a series of steps. Specifically, it is preferable, after the bubble-containing pressure-sensitive adhesive composition is prepared by bubble mixing as described above, to form a bubble-containing acrylic pressure-sensitive adhesive layer by using the pressure-sensitive adhesive composition.

The bubble-containing acrylic pressure-sensitive adhesive layer is formed by forming a coated film by applying the pressure-sensitive adhesive composition on a suitable substrate and hardening the layer (for example, photohardening by irradiation of active-energy ray).

The thickness of the bubble-containing acrylic pressure-sensitive adhesive layer is not particularly limited, but preferably, for example, 100 to 3000 µm, more preferably 400 to 2000 µm, and still more preferably 400 to 1200 µm. A thickness of less than 100 µm may lead to deterioration in adhesiveness, while a thickness of more than 3000 µm to difficulty in installation in module.

### (Porous screen)

The porous screen is a screen to be laminated to the pressure-sensitive adhesive face of the bubble-containing acrylic pressure-sensitive adhesive layer, and the pressure-sensitive adhesiveness is controlled on the pressure-sensitive adhesive face having the laminated porous screen and thus, the pressure-sensitive adhesive face shows both the tackiness in the thickness direction (thickness direction of the bubble-containing acrylic pressure-sensitive adhesive layer) and the lubricity in the horizontal direction (direction perpendicular to the thickness direction of the bubble-containing acrylic pressure-sensitive adhesive layer).

The porous screen is a screen that is porous, i.e., a porous (or pore-containing) sheet-shaped product. The porous screens also include mesh product in the present invention.

Specific examples of the porous screens include, but are not limited to, nets (mesh products such as plastic nets, fiber nets, and metal fiber nets), woven fabrics, nonwoven fabrics, paper, and the like. Alternatively for example, plastic sheets with pores, thin metal sheets with pores, woven fabrics with pores, nonwoven fabrics with pores, and paper with pores (referred to as "pore-containing sheets") may be used. In particular, nets and pore-containing sheets are preferable, and particularly, nets are preferable.

The shape of the pore or the mesh of the porous screen is not particularly limited, if the property above is exhibited, but, for example, triangular, quadrangular (e.g., square, rectangle, rhombus, or trapezoid), circular (e.g., perfect circle, nearly perfect circle, or ellipse), or the like. Alternatively, it may be an undefined shape similar to the shape above. All of the shapes of the pores or the networks may be the same as or different from each other.

The thickness of the porous screen is not particularly limited, if the properties above are shown, but preferably, for example 10 to 500 µm, and more preferably 50 to 150 µm. A thickness of less than 10 µm may lead to decrease in lubricity, while a thickness of more than 500 µm may lead to fail to secure adhesiveness and lubricity at the same time.

The raw material for the porous screen when it is a net is not particularly limited, but may be a synthetic resin (plastic) such as nylon, polyethylene, polypropylene, or polyester, a natural fiber, a metal fiber, or the like.

The basis weight of the porous screen is not particularly limited, but, preferably 1.0 to 70 g/m², and more preferably 2.0 to 20 g/m², for improvement both in adhesiveness and lubricity on the pressure-sensitive adhesive face to which the porous screen is laminated.

The size of the mesh is not particularly limited, but preferably 5 pieces/inch to 50 pieces/inch, and more preferably 20 pieces/inch to 40 pieces/inch, for improvement both in adhesiveness and lubricity on the pressure-sensitive adhesive face to which the porous screen is laminated.

Examples of commercially available nets include "Net ND20" (trade name, produced by Daisen Co., Ltd.) and the like.

The raw material for the porous screen when it is a pore-containing sheet is not particularly limited, but preferably a plastic or a nonwoven fabric, for improvement both in adhesiveness and lubricity on the pressure-sensitive adhesive face to which the porous screen is laminated.

The size of the pores in the porous screen is not particularly limited if the properties above are exhibited, and the sizes of the pores may be the same or different from each other. The pore size in the largest pore region is, for example, approximately 500 µm to 10 mm.

Distribution of the pores in the porous screen is not particularly limited if the properties above are exhibited, and the pores may be formed in clumps in a particular region or as dispersed in the entire porous screen.

The distance between the pores of the porous screen is not particularly limited, and may or may not be constant.

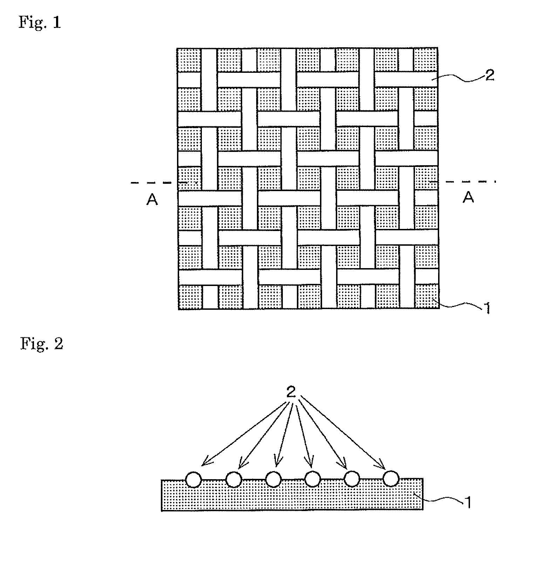

In the present invention, the porous screen-covered pressure-sensitive adhesive face of the bubble-containing acrylic pressure -sensitive adhesive layer is superior both in tackiness and lubricity. More specifically, the bubble-containing acrylic pressure-sensitive adhesive layer having a porous screen shows tackiness in the thickness direction, while the bubble-containing acrylic pressure-sensitive adhesive layer having a porous screen shows lubricity in the horizontal direction (direction perpendicular to the thickness direction). Hereinafter, the properties will be described with reference to Figures 1, 2, and 3. A porous screen having square network is shown as the porous screen in Figures 1, 2 and 3, but the shape of the network is not limited to the square shape.

Figure 1 is a schematic top view illustrating a bubble-containing acrylic pressure-sensitive adhesive layer having a porous screen on one pressure-sensitive adhesive face, and Figure 2 is schematic crosssectional view illustrating the bubble-containing acrylic pressure-sensitive adhesive layer having a porous screen on one pressure-sensitive adhesive face shown in Figure 1, as seen along a line A-A cross section. In Figures 1 and 2, a reference numeral 1 represents a bubble-containing acrylic pressure-sensitive adhesive layer, and 2 represents a porous screen. The tape shown in Figures 1 and 2 is also a base-less-type double-faced pressure-sensitive adhesive tape made only of a bubble-containing acrylic pressure-sensitive adhesive layer having a porous screen only on one pressure-sensitive adhesive face.

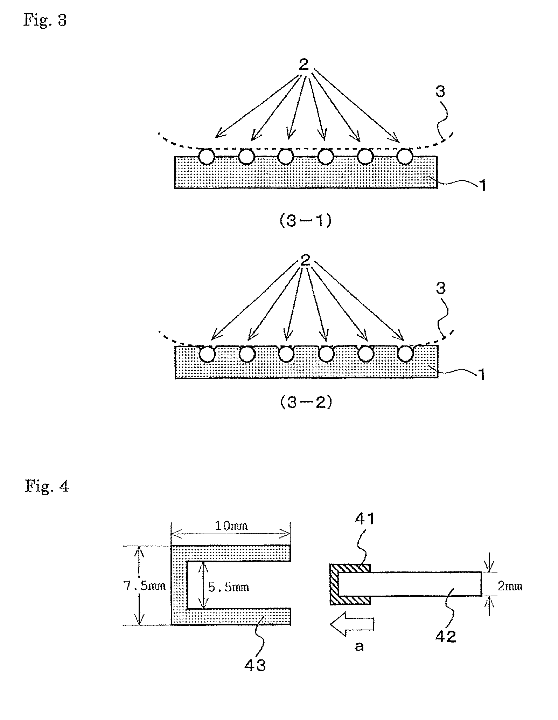

Figure 3 includes a schematic sectional view illustrating a state of a bubble-containing acrylic pressure-sensitive adhesive layer having a porous screen on one pressure-sensitive adhesive face in contact with a contactant in the non-pressurized state on the face where the porous screen is formed (3-1), and a schematic sectional view illustrating a state of a bubble-containing acrylic pressure-sensitive adhesive layer having a porous screen on one pressure-sensitive adhesive face in contact with a contactant in the pressurized state on the face where the porous screen is formed (3-2). In Figure 3, a reference numeral 1 represents a bubble-containing acrylic pressure-sensitive adhesive layer; 2 represents a porous screen; and 3 represents a contactant.

The pressure-sensitive adhesive face covered with the porous screen shows above-mentioned properties, because part of the porous screen 2 is partially embedded into the bubble-containing acrylic pressure-sensitive adhesive layer 1 in the unpressurized state (see Figure 2. about half of each contactant is embedded in Figure 2) and thus, the porous screen 2 remains protruded on the surface of the bubble-containing acrylic pressure-sensitive adhesive layer 1, inhibiting contact of the contactant 3 onto the surface of the bubble-containing acrylic pressure-sensitive adhesive layer 2 (see Figure 3(3-1)). On the other hand, the porous screen 2 is deeply embedded into the bubble-containing pressure-sensitive adhesive layer 1 in the pressurized state (in which the contactant 3 is in contact under sufficiently high contact pressure), and thus, the bubble-containing acrylic pressure-sensitive adhesive layer 1 is deformed and the porous screen 2 is also deformed under compression, This makes part of the bubble-containing acrylic pressure-sensitive adhesive layer 1 protrude through the porous screen 2, and the part of the bubble-containing acrylic pressure-sensitive adhesive layer 1 penetrating through the porous screen 2 come in contact with the contactant 3 (see Figure 3(3-2)).

The degree of the embedment of the porous screen in the unpressurized state and the pressurized state is not particularly limited, if the properties are exhibited.

The area ratio of the pressure-sensitive adhesive region to porous screen region (region excluding the pressure-sensitive adhesive region), i.e., pressure-sensitive adhesive region/porous screen region [for example, the area ratio of the pressure-sensitive adhesive region to the net region (region excluding the pressure-sensitive adhesive region) when a net is used as the porous screen], on the pressure-sensitive adhesive face of the bubble-containing acrylic pressure-sensitive adhesive layer covered with a porous screen is preferably 5/95 to 95/5, and more preferably 10/90 to 90/10, for improvement both in adhesiveness and lubricity.

In determining the area ratio of the pressure-sensitive adhesive region to the porous screen region, the porous screen-covered face (20 mm ×20 mm) is copied as expanded (e.g., by about 16 times), and the pressure-sensitive adhesive region and the porous screen region are divided from the obtained copy with scissors. The area ratio was determined by measuring the weights of the sample fractions thus separated and by calculation with the resulting weight ratio.

In the present invention, the frictional force, which is defined as the stress applied when a sample of 2 cmx2 cm in size carrying a 30-g load fixed at least on one side of the bubble-containing acrylic pressure-sensitive adhesive layer is pulled on an aluminum plate ("SK-AAluminum Plate 1050P", trade name, manufactured by Sumitomo Light Metal Industries) in the horizontal direction at a speed of 300 mm/min, is 0.01 to 1,0 N/cm², and preferably 0.01 to 0.5 N/cm². A frictional force of more than 1.0 N/cm² may lead to generation of troubles in lubricity.

In the present invention, it is preferable to control the pressure-sensitive adhesiveness by laminating a porous screen and the frictional force in a particular range, by improving the lubricity in the horizontal direction of the pressure-sensitive adhesive face covered by the porous screen. It is thus important that the frictional force, which is defined as the stress applied when a sample of 2 cmx2 cm in size carrying a 30-g load fixed to the bubble-containing acrylic pressure-sensitive adhesive layer is pulled on an aluminum plate in the horizontal direction at a speed of 300 mm/min, is in the range above.

Also in the present invention, the adhesive power of the pressure-sensitive adhesive face of the bubble-containing acrylic pressure-sensitive adhesive layer covered with a porous screen (180° peel separation, against aluminum plate, tensile speed: 300 mm/minute) is not particularly limited, but, preferably 0.1 to 50 (N/20 mm), more preferably 0.1 to 20 (N/20 mm), and still more preferably 0.2 to 10 (N/20 mm), for improvement both in adhesiveness and lubricity.

Thus, a double-faced pressure-sensitive adhesive tape having a bubble-containing acrylic pressure-sensitive adhesive layer, wherein the frictional force, which is defined as the stress applied when a sample of 2 cm×2 cm in size carrying a 30-g load fixed at least to one side of the bubble-containing acrylic pressure-sensitive adhesive layer is pulled on an aluminum plate in the horizontal direction at a speed of 300 mm/min, is 0.01 to 1.0 N/cm² and the adhesive power (180° peel separation, against aluminum plate, tensile speed: 300 mm/minute) is 0.1 to 50 (N/20 mm), is superior both in lubricity and tackiness on the pressure-sensitive adhesive face.

### (Release liner)

The pressure-sensitive adhesive face (pressure-sensitive adhesive layer surface) of the double-faced pressure-sensitive adhesive tape according to the present invention may be protected with a release liner (separator, separation film) before use. The pressure-sensitive adhesive faces of the double-faced pressure-sensitive adhesive tape may be protected respectively with two release liners or with a single release liner having separation faces on both sides as it is wound in the roll shape. The release liner that is used as a protective material for the pressure-sensitive adhesive layer is removed before the tape is bonded to the adherend.

Such a release liner is not particularly limited, and any traditional release paper or the like may be used, and examples thereof for use include bases having a release-coating layer, low-adhesive bases of a fluorochemical polymer, low-adhesive bases of a non-polar polymer, and the like. Examples of the release-coating bases include plastic films, papers and others that are surface-treated with a release coating agent such as a silicone-based, long-chain alkyl-based, or fluorine-based agent or molybdenum sulfide. Examples of the low-adhesive bases of a fluorochemical polymer include polytetrafluoroethylene, polychloro-trifluoroethylene, polyvinyl fluoride, polyvinylidene fluoride, tetrafluoroethylene-hexafluoropropylene copolymers, chlorofluoroethylone-vinylidene fluoride copolymers and the like. Examples of the non-polar polymers for the low-adhesive bases of non-polar polymer include olefinic resins (such as polyethylene and polypropylene) and the like. The release liner can be prepared by a known and traditional method. In addition, the thickness and others of the release liner are also not particularly limited.

### (Other layers)

The double-faced pressure-sensitive adhesive tape according to the present invention may contain other layers (such as intermediate layer and undercoat layer) in the range that does not impair the advantageous effects of the invention.

### (Base)

The base for the double-faced pressure-sensitive adhesive tape according to the present invention when it is a base-containing type is not particularly limited, and examples thereof for use include thin-film products including paper bases such as paper; fiber bases such as woven fabric, nonwoven fabric and net (the raw material is not particularly limited and may be selected properly from manila hemp, rayon, polyester, pulp fiber and others); metal bases such as metal foil and metal plate; plastic bases such as plastic film and sheet; rubber bases such as rubber sheet; foam bases such as foam sheet; the laminated films thereof (such as laminate films of a plastic base and another base, and those of plastic films (or sheets)) and the like. A plastic base such as plastic film or sheet can be used preferably as the base. Examples of the raw materials for the plastic film and sheet include olefinic resins prepared from an α-olefin as the monomer component such as polyethylene (PE), polypropylene (PP), ethylene-propylene copolymers and ethylene-vinyl acetate copolymers (EVAs); polyester resins such as polyethylene terephthalate (PET), polyethylene naphthalate (PEN), and polybutylene terephthalate (PBT); polyvinyl chloride (PVC); vinyl acetate resins; polyphenylene sulfide (PPS); amide resins such as polyamides (nylon) and wholly aromatic polyamides (aramides); polyimide resins ; polyether ether ketone (PEEK) and the like. These raw materials may be used alone or in combination of two or more.

When a plastic base is used as the base, deformation, such as elongation, thereof may be controlled for example by stretching treatment. When the bubble-containing acrylic pressure-sensitive adhesive layer is formed by hardening by active-energy ray irradiation, a base that does not inhibit transmission of the active-energy ray is used preferably as the base.

For improvement in adhesiveness of the base to the acrylic pressure-sensitive adhesive layer, the surface of the substrate may be oxidized by a common chemical or processed by a physical surface treatment method such as corona treatment, chromic acid treatment, ozone exposure, flame exposure, active-pressure electric shock exposure, or ionizing radiation treatment, and may also be coated, for example, with an undercoat agent and a release coating agent.

The thickness of the base varies according to the desired strength, flexibility, and intended purpose thereof, but is generally about 1000 µm or less (e.g., 1 to 1000 µm), preferably 1 to 500 µm, and more preferably 3 to 300 µm, although it is not limited thereto. The base may be in any shape, single-layered or multi-layered.

The method of producing the double-faced pressure-sensitive adhesive tape according to the present invention is not particularly limited, but for example, the double-faced pressure-sensitive adhesive tape having a bubble-containing acrylic pressure-sensitive adhesive layer covered with a porous screen can be prepared by obtaining a bubble-containing acrylic pressure-sensitive adhesive layer according to a known and traditional method and laminating a porous screen onto the surface of the bubble-containing acrylic pressure-sensitive adhesive layer.

More specifically, the base-less type of double-faced pressure-sensitive adhesive tape made only of a bubble-containing acrylic pressure-sensitive adhesive layer having a porous screen can be prepared, for example, by preparing a bubble-containing acrylic pressure-sensitive adhesive layer according to a known and traditional method, and laminating a porous screen on the surface of the bubble-containing acrylic pressure-sensitive adhesive layer.

Alternatively, a base-containing double-faced pressure-sensitive adhesive tape having a bubble-containing acrylic pressure-sensitive adhesive layer that include a porous screen, another pressure-sensitive adhesive layer (pressure-sensitive adhesive layer other than the bubble-containing acrylic pressure-sensitive adhesive layer), and a base can be prepared by forming a bubble-containing acrylic pressure-sensitive adhesive layer on one side of a base according to a known and traditional method, forming a bubble-containing acrylic pressure-sensitive adhesive layer having a porous screen by laminating a porous screen on the surface of the bubble-containing acrylic pressure-sensitive adhesive layer, and forming another pressure-sensitive adhesive layer on the other side of the base according to a known and traditional method.

The double-faced pressure-sensitive adhesive tape according to the present invention exhibits both preferable lubricity and tackiness on the pressure-sensitive adhesive face controlled in frictional force (e.g., surface of the bubble-containing acrylic pressure-sensitive adhesive layer covered with a porous screen).

Due to the properties above, i.e., the lubricity on the pressure-sensitive adhesive face where the frictional force is controlled, the double-faced pressure-sensitive adhesive tape according to the present invention can be used in certain bonding applications wherein the tape is desirably not bonded to a particular adherend in the undesired region because of lubricity but bonded to it only in the desired region because of tackiness.

For example, it is possible to use a double-faced pressure-sensitive adhesive tape made only of a bubble-containing acrylic pressure-sensitive adhesive layer with one pressure-sensitive adhesive face covered with a porous screen and the other pressure-sansitive adhesive face not covered with a porous screen, to bond the double-faced pressure-sensitive adhesive tape onto one member such that the pressure-sensitive adhesive face of the double-faced pressure-sensitive adhesive tape that is not covered with a porous screen is in contact with the member, and then to bond the member having the bonded double-faced pressure-sensitive adhesive tape mainly onto the bottom of the dent in the other dent-containing member. Thus, the one member can be bonded to the dent of the other dent-containing member at high-processability. It is because, in the member bonded to the pressure-sensitive adhesive face of the double-faced pressure-sensitive adhesive tape uncovered with a porous screen, the adhesive layer covered with a porous screen is exposed, and the pressure-sensitive adhesive layer does not penetrate the porous screen, showing lubricity, in the unpressurized state (when the contact pressure is low) on the pressure-sensitive adhesive face covered with the porous screen, even if the pressure-sensitive adhesive face is brought into contact with the member outside the desired region.

It is possible by using the double-faced pressure-sensitive adhesive tape according to the present invention for example, to cover the top, bottom, and end faces close to the panel end before installation of the panel into the frame at high processability and workability during production of solar cell modules. In addition, the pressure-sensitive adhesive tape can be present in the compressed state after production of the solar cell module, and thus, shows the water-blocking property due to the bubble structure, thereby preventing penetration of water into the panel. For that reason, the double-faced pressure-sensitive adhesive tape according to the present invention can be used preferably in production of solar cell modules.

### EXAMPLES

Hereinafter, the present invention will be described more in detail with reference to Examples, but it should be understood that the present invention is not restricted at all by these Examples.

### (Usage example of porous screen 1)

The porous screen used was a plastic net ("Net ND20," trade name, manufactured by Daisen Co., Ltd., thickness: 110 µm, knitted, basis weight: 6.6 g/m², pore number: 23 pieces/inch vertically and 39 pieces/inch horizontally).

### (Usage example of porous screen 2)

The porous screen used was a porous nonwoven fabric ("Porous Nonwoven Fabric of Special Mesh Paper A" (manufactured by NIPPON PAPER PAPYLIA Co., Ltd.), thickness: 70 µm, hole shape: circular, hole diameter: 4 mmϕ, basis weight: 16 g/m²).

### (Usage example of porous screen 3)

The porous screen used was a porous nonwoven fabric ("Punched Nonwoven Fabric of Special Mesh Paper B" (manufactured by NIPPON PAPER PAPYLIA Co., Ltd.), thickness: 60 µm, hole shape: circular, hole diameter: 3 mmϕ, basis weight: 16 g/m²).

### (Example 1)

A photopolymerization initiator ["Irgacure 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts as monomer components, and ultraviolet ray was irradiated until the viscosity of the mixture (as determined by a BH viscometer, No. 5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center, and a rotor facing the gears-equipped stator and having fine gears on a circular plate similarly to the stator. Nitrogen was supplied until the amount of the bubbles mixed became approximately 15 capacity % with respect to the entire volume of the liquid extruded, to give a bubble-containing pressure-sensitive adhesive composition.

The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one side, to a thickness after drying and hardening of 1.2 mm. In other words, the bubble-containing pressure-sensitive adhesive composition was held between the polyethylene terephthalate bases.

Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.

The polymer polymerization rate of the tape obtained was 98.9 wt %.

The plastic net (of the Usage example of porous screen 1) was laminated onto one pressure-sensitive adhesive face of the pressure-sensitive adhesive tape by using a four-axis laminator, while the network shape of the net was kept uniform, to give a pressure-sensitive adhesive tape having a bubble-containing pressure-sensitive adhesive layer covered by the net on one pressure-sensitive adhesive face. The area ratios (occupying ratio) of the pressure-sensitive adhesive region and the net region (region other than the pressure-sensitive adhesive region) on the side of the bubble-containing pressure-sensitive adhesive layer having the net were respectively 78% for the pressure-sensitive adhesive region and 22% for the net region.

### (Example 2)

A photopolymerization initiator [`"Irgacure 651", trade name (manufactured by Ciba Japan)]: 0.05 wt part, a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts as the monomer components, and ultraviolet ray was irradiated until the viscosity (as determined with a BH viscometer, No.5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center and a rotor facing the gears-equipped stator and having fine gears on a circular plate similarly to the stator. Nitrogen was supplied until the amount of the bubbles mixed became approximately 15 capacity % with respect to the entire volume of the liquid extruded, to give a bubble-containing pressure-sensitive adhesive composition.

The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one side, to a thickness after drying and hardening of 1.2 mm. In other words, the bubble-containing pressure-sensitive adhesive composition was held between the polyethylene terephthalate bases.

Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.

The polymer polymerization rate of the obtained tape was 98.9 wt %.

The porous nonwoven fabric (of the Usage example of porous screen 2) was laminated onto one pressure-sensitive adhesive face of the pressure-sensitive adhesive tape by using a four-axis laminator to give a pressure-sensitive adhesive tape having a bubble-containing pressure-sensitive adhesive layer covered by the porous nonwoven fabric on one pressure-sensitive adhesive face. The area ratios (occupying ratio) of the pressure-sensitive adhesive region and the net region (region other than the pressure-sensitive adhesive region) on the face having the porous nonwoven fabric of the bubble-containing pressure-sensitive adhesive layer were respectively 62% for the pressure-sensitive adhesive region and 38% for the net region.

### (Example 3)

A photopolymerization initiator ["Irgacuxe 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts, and acrylic acid: 10 wt parts mixed as the monomer components, and ultraviolet ray was irradiated until the viscosity of the mixture (as determined by a BH viscometer, No. 5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was then introduced into the adhesive precursor for generation of bubbles, by using an apparatus equipped with a stator having many fine gears on a circular plate having a through hole in the center and a rotor facing the stator having gears and having fine gears on a circular plate similarly to the stator. Nitrogen was supplied until the amount of the bubbles mixed reached approximately 15 capacity % with respect to the entire volume of the liquid extruded, to give a bubble-containing pressure-sensitive adhesive composition.

The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one side, to a thickness after drying and hardening of 1.2 mm. In other words, the bubble-containing pressure-sensitive adhesive composition was held between the polyethylene terephthalate bases.

Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.

The polymer polymerization rate of the obtained tape was 98.9 wt %,

The porous nonwoven fabric (of the Use example of porous screen 3) was laminated onto one pressure-sensitive adhesive face of the pressure-sensitive adhesive tape by using a four-axis laminator, to give a pressure-sensitive adhesive tape having a bubble-containing pressure-sensitive adhesive layer covered by the porous nonwoven fabric on one pressure-sensitive adhesive face. The area ratios (occupying ratio) of the pressure-sensitive adhesive region and the net region (region other than the pressure-sensitive adhesive region) on the face having a porous nonwoven fabric of the bubble-containing pressure-sensitive adhesive layer were respectively 8% for the pressure-sensitive adhesive region and 92% for the nonwoven fabric region.

### (Comparative Example 1)

A photopolymerization initiator ["Irgacure 651", trade name (manufactured by Ciba Japan)]: 0.05 wt part and a photopolymerization initiator ["Irgacure 184", trade name (manufactured by Ciba Japan)]: 0.05 wt part were blended with a monomer mixture containing 2-ethylhexyl acrylate: 90 wt parts and acrylic acid: 10 wt parts mixed as the monomer components, and ultraviolet ray was irradiated until the viscosity of the mixture (as determined by a BH viscometer, No.5 rotor, 10 rpm, measurement temperature: 30°C) reached approximately 15 Pa·s, to give a partially polymerized composition (partial polymer, sirup). A photopolymerization initiator ["Irgacure 651", trade name (manufactured by Ciba Japan)]: 0.04 wt part, 1,6-hexanediol diacrylate: 0.1 wt part, and a surfactant ["MEGAFACE F-477", trade name, manufactured by DIC Corporation]: 0.7 wt part, and carbon black: 0.02 wt part were added to the sirup: 100 wt parts. In addition, hollow glass balloons ("CEL-STAR Z-27", trade name, manufactured by Tokai Kogyo Co., Ltd.) were added to the sirup at a ratio of 30 capacity % with respect to the entire volume of the sirup, to give an adhesive precursor. The entire volume of the hollow glass balloons in the adhesive precursor was approximately 23 capacity % with respect to the entire volume of the adhesive precursor. Nitrogen was introduced into the adhesive precursor for generation of bubbles, by using an apparatus equipped with a stator having many fine gears on a circular plate having a through hole in the center and a rotor facing the gears-equipped stator and having fine gears on a circular plate similarly to the stator. Nitrogen was supplied until the amount of the bubbles mixed reached approximately 15 capacity % with respect to the entire volume of the liquid extruded, to give a bubble-containing pressure-sensitive adhesive composition.

The bubble-containing pressure-sensitive adhesive composition was fed into a wet-lamination roll coater through a tube (diameter: 19 mm, length: approximately 1.5 m), and the bubble-containing pressure-sensitive adhesive composition was coated between the release-coating faces of two polyethylene terephthalate bases release-coated on one side, to a thickness after drying and hardening of 1.2 mm. In other words, the bubble-containing pressure-sensitive adhesive composition was held between the polyethylene terephthalate bases.

Ultraviolet ray at an illuminance of 5 mW/cm² was then irradiated from both sides for 4 minutes, curing the bubble-containing pressure-sensitive adhesive composition, to give a pressure-sensitive adhesive tape having a pressure-sensitive adhesive layer (bubble-containing pressure-sensitive adhesive layer) of the bubble-containing adhesive.

The polymer polymerization rate of the obtained tape was 98.9 wt %.

### (Evaluation)

The adhesive power, the frictional force, and the processability of the samples in Examples and Comparative Example were measured or evaluated respectively.

### (Measurement of adhesive power)

A pressure-sensitive adhesive sheet of 20 mm in width was pressure-bonded onto an adherend by one reciprocation of a 2-kg roller under the condition of 23°C and 50% RH, and then left still for 30 minutes after bonding. The 180° peel peeling power (N/20 mm) of the sheet from the adherend was then determined by using a tensile tester (instrument name: "TG-1kN," manufactured by Minebea) (tensile speed: 300 mm/minute).

The adherends used were an aluminum plate ("SK-AAluminum Plate 1050P", trade name, manufactured by SUMITOMO LIGHT METAL INDUSTRIES, LTD.), a polyethylene terephthalate (PET) film ("S10 #100", trade name, manufactured by Toray Industries Inc.), and a glass plate ("Micro-Slide Glass, No. 5", trade name, manufactured by Matsunami Glass Ind., Ltd. thickness: 3 mm).

### (Measurement of frictional force)

A pressure-sensitive adhesive tape sample cut to a size of 2 cmx2 cm was placed on an adherend with its porous screen face (net face) in contact with the adherend. The adherend used was an aluminum plate ("SR-A Aluminum Plate 1050P", trade name, manufactured by SUMITOMO LIGHT METAL INDUSTRIES, LTD.).

Then, a 30-g weight was placed on the still-standing adhesive tape sample for application of a load of 30 g to the tape sample.

The pressure-sensitive adhesive tape sample was pulled in the horizontal direction at a speed of 300 mm/min, and the stress applied then was determined (N/cm²).

### (Evaluation of processability)

A pressure-sensitive adhesive tape sample (100×30 mm) was pressure-bonded onto an acrylic plate (100 mm×100 mm, thickness: 2 mm), while the end of the plate was covered with the tape sample. The porous screen face (net face) was made externally oriented (exposed) then. A sample for evaluation was prepared in this way.

The test sample was then inserted into a C-shaped aluminum frame (aluminum frame 43 in Figure 4) in the direction a as shown in Figure 4, and the lubricity then was evaluated according to the following evaluation criteria.

### Evaluation criteria:

Good (○): high lubricity, allowing easy insertion
Bad (×): low lubricity, difficulty in insertion.

When a foam tape is used as the sealing material between a panel end face and a frame in solar cell modules, high lubricity of the foam tape during insertion into frame is preferable.

Figure 4 is a schematic sectional view showing the method of evaluating the processability. In Figure 4, a reference numeral 41 represents a double-faced pressure-sensitive adhesive tape sample; 42 represents an acrylic plate; 43 represents an aluminum frame; and a represents the direction of insertion. The processability of the samples in Examples and Comparative Example were evaluated by the method shown in Figure 4.

**[Table 1]**

| | Area ratio (%) | | Adhesive power (N/20mm) | | | Frictional force (N/cm²) | Processability |
|---|---|---|---|---|---|---|---|
| | Porous screen region | Pressure-sensitive adhesive region | Aluminum | PET | Glass | | |
| Example 1 | 22 | 78 | 8 | 6 | 6 | 0.3 | ○ |
| Example 1 | 38 | 62 | 2 | 1 | 2 | 0.5 | ○ |
| Example 1 | 92 | 8 | 0.2 | 0.5 | 0.7 | 0.1 | ○ |
| Comparative Example 1 | 0 | 100 | 28 | 31 | 41 | 13 | × |

## Claims

1. A double-faced pressure-sensitive adhesive tape having an acrylic pressure-sensitive adhesive layer containing bubbles and/or hollow microspheres, **characterized in that** the frictional force, which is defined as the stress applied when a sample of 2 cmx2 cm in size having a 30 g load fixed at least on one side of the acrylic pressure-sensitive adhesive layer containing bubbles and/or hollow microspheres is pulled on an aluminum plate in a horizontal direction at a speed of 300 mm/min, is 0.01 to 1.0 N/cm².

2. The double-faced pressure-sensitive adhesive tape according to Claim 1, wherein the acrylic pressure-sensitive adhesive layer containing bubbles and/or hollow microspheres has a porous screen at least on one side, and the frictional force, which is defined as the stress applied when a sample of 2 cmx2 cm having a 30 g load fixed is pulled with its porous screen-side face placed on an aluminum plate in the horizontal direction at a speed of 300 mm/min, is 0.01 to 1.0 N/cm².

3. The double-faced pressure-sensitive adhesive tape according to Claim 2, wherein the area ratio of the pressure-sensitive adhesive region to the porous screen region (region other than the pressure-sensitive adhesive region), i.e., pressure-sensitive adhesive region /porous screen region (region other than the pressure-sensitive adhesive region), on the side of the acrylic pressure-sensitive adhesive layer containing bubbles and/or hollow microspheres having a porous screen, is 5/95 to 95/5.
